# EUROPEAN PATENT APPLICATION

(11) **EP 1 769 880 A1**
(43) Date of publication of application: **04.04.2007**
(21) Application number: 05766432.8
(22) Date of filing: 21.07.2005
(51) Int. Cl.: B23K 31/00, B23K 9/095

(54) **WELDED PORTION VISUALIZING METHOD AND DEVICE**

(30) Priority: 22.07.2004 JP 2004213858
(71) Applicant: Ishikawajima-Harima Heavy Industries Co., Ltd., Tokyo 135-8710 (JP)
(72) Inventor: YAGI, Takehito c/o Ishikawajima-Harima, Koto-ku, Tokyo 135-8710 (JP); SHIMA, Teruyuki c/o Ishikawajima-Harima, Koto-ku, Tokyo 135-8710 (JP)
(74) Representative: Lamb, Martin John Carstairs
(86) International application number: PCT/JP2005/013375
(87) International publication number: WO 2006/009201

(57) **Abstract**

A method and device for observing a butt welded part of a pair of welding members to be welded having a step therebetween are provided without being interrupted by a shadow due to the step. The device comprises a CCD camera 13 for photographing a welded part 12 is arranged inside a vertical plane immediately above a groove portion 11 at which welding members 10a and 10b differing in thickness are subjected to butt arrangement at a predetermined inclined angle from a normal line 14, a flash lamp 15 is provided inside the vertical plane immediately above the groove portion 11 in an angular arrangement deviated at ±10° to 20° from an angular arrangement symmetrical to the CCD camera in which the normal line 14 is given as a symmetrical axis, illumination light is irradiated from the flash lamp 15 arranged immediately above the groove portion 11, thereby eliminating a fear of generating a shadow at the butt welded part 12 of the member to be welded 10a with the counterpart 10b, thereby preventing regular reflection components of high- brightness illumination light irradiating the welded part 12 from the flash lamp 15 from being intensively made incident into the CCD camera 13 to obtain images of the welded part 12 having brightness appropriate in image processing.

## Description

### [Technical Field]

The present invention relates to a welded-part visualization method for observing a welded part and a device therefor.

### [Backgruond Art]

In conducting a welding operation, it is important to observe a welded portion including the resultant molten weld pool and the periphery thereof and a groove positioned forward in the welding direction for the purpose of managing and stabilizing the welding quality.

However, during welding, light such as the scattered light of a laser, plasma or arc used in welding is emitted intensively from a welded part. The scattered light of the laser or plasma is stronger than light emitted from a molten weld pool particularly in laser welding or plasma welding. Therefore, in an attempt to photograph a welded part by using a camera equipped with an optical neutral density filter, for example, halation occurs in a part of the molten weld pool due to excessive light quantity, thereby making it extremely difficult to observe the molten weld pool. Under these circumstances, a conventional technology has been proposed as a method for monitoring a welded part by using a camera in which a strong (high brightness) illumination light source is used to make a direct observation.

One of the proposed methods for carrying out a direct monitoring of such a welded part includes a method in gas sealed arc welding, in which, since the arc light includes mainly strong light in a short wavelength range and a molten weld pool radiates strong light in a longer wavelength range, a light source having a light-emitting wavelength range predominant in light at a near-infrared region can be used for visual observation of the welded part. More specifically, the proposed method uses a light source such as a halogen lamp having a peak at a wavelength of 600 to 800 nm to illuminate the molten weld pool and the periphery thereof during arc welding, and the thus illuminated welded part is photographed by using a CCD camera equipped with an optical filter having an observation wavelength range of 550 to 700nm, so that, while blocking light including shorter wavelength range constituting the arc light region, the visual observation can be carry out by using an observation wavelength, which is close to the light emitted from a molten weld pool (for example, refer to Patent Document 1).

Further, another method for carrying out direct monitoring of a welded part includes a method constituted by a light source for emitting intermittently toward the welded part by an illumination light source equal in intensity to or higher in brightness than light from a molten weld pool or scattered light, a camera equipped with a high-speed shutter for photographing the molten weld pool and the periphery thereof, and a timing device (synchronization device) for synchronizing the irradiation timing by the above-described light source with the timing of opening/closing the shutter by the above-described camera. In this method, light higher in brightness than light from the molten weld pool is emitted for illumination from the above light source toward the molten weld pool formed on a base member by a welding torch and the periphery thereof, thereby imparting light higher in brightness than light emitted from the molten weld pool itself and scattered light to the molten weld pool and the periphery. At the same time, this allows the above-described high brightness illumination light reflected from a molten part to be made incident into the camera by a high-speed shutter in synchronization with the irradiation timing of the above illumination light source, while adverse light such as scattered light from the welded-part is blocked by closing the shutter to greatly decrease the quantity of incident light, which makes it possible to carry out visual observations of the molten weld pool at the welded part and the periphery thereof.

In this case, a light source for illuminating the above-described welded part at a high brightness includes, for example, a pulse laser light (refer to Patent Document 2, for example), a stroboscopic lamp such as a xenon stroboscopic lamp (refer to Patent Document 3, for example) and an ultraviolet stroboscopic lamp different in wavelength range of plasma light emitted from a welded part (refer to Patent Document 4, for example).

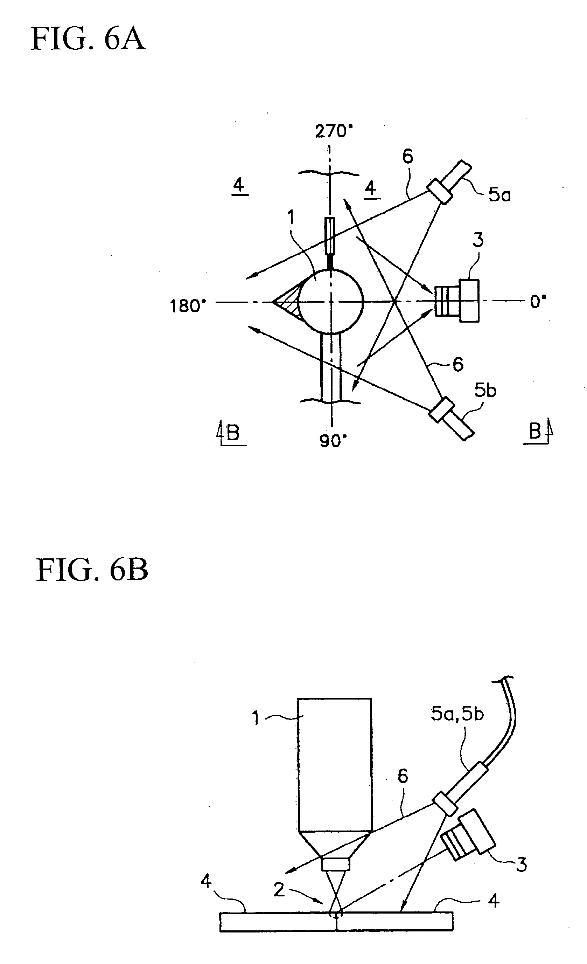

Also, a device is proposed, in which the above-described pulse laser light is used to intermittently impart highly-bright illumination to a welded part, and a camera (CCD camera) equipped with a high speed shutter is used to photograph the welded part illuminated by the highly bright pulse laser light, thereby making it possible to make direct observation of the welded part. As illustrated in Fig. 6A and Fig. 6B, the device comprises a CCD camera 3 for photographing the welded part 2 formed below a welding torch 1. The CCD camera 3 is arranged at a position of 0° in a clockwise direction in a planar arrangement where a welding direction (welding proceeding direction) is set at 270°, with an inclined angle kept approximately at 30° in a vertical direction with respect to the flat surface of a base member (welding member to be welded) 4. First and second laser irradiators 5a and 5b for irradiating pulse laser 6 guided from a pulse laser generator (not illustrated) are each placed in a range from 20° to 45° in a clockwise direction in a planar arrangement where the welding direction is set at 270° like in the above and a range from 315° to 340°, with an inclined angle kept at 30° to 45° in a vertical direction with respect to the flat surface of the base member 4, (refer to Patent Document 5, for example). In this type of device, it is possible to reduce the influence of a shadow made by the welding torch 1 when the welded part is illuminated by the lasers 5a, 5b such that the influence of the shadow by the torch 1 on the sight of the welded part 2 is reduced.

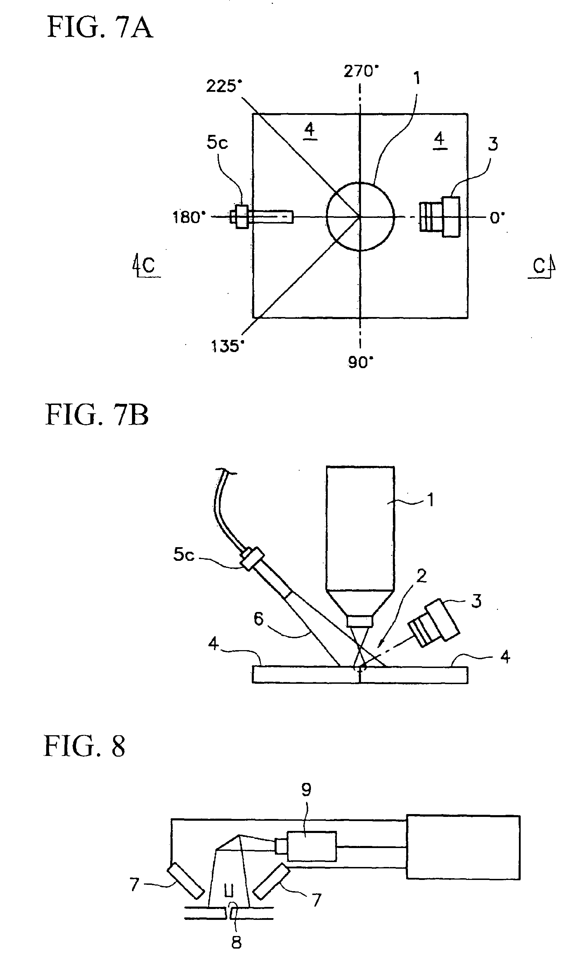

Further, as illustrated in Figs 7A and 7B, a device is proposed in which, similar to the above, a CCD camera 3 for photographing a welded part 2 is arranged at a position of 0° in a clockwise direction in a planar arrangement with an inclined angle maintained at 30° in a vertical direction with respect to the surface of a base member, where the welding direction is set at 270º in a clock wise direction, and one pulse laser irradiator 5c is placed in a range from 135° to 225° in a planar arrangement where the welding direction is set at 270° like in the above, with an inclined angle kept at 30° to 45° in a vertical direction with respect to the surface of the base member (refer to Patent Document 6, for example).

Still further, as illustrated in Fig. 8, another device is proposed in which a high-brightness flash lamp is used as an illumination light source in place of a pulse laser. Two units of a high-brightness flash lamp 7 are arranged both on the right and left sides of a groove portion 8, and a high pixel CCD camera 9 equipped with an electronic shutter for photographing a welded part is also provided to synchronize the opening/closing of the electronic shutter of the CCD camera with the irradiation timing of light illuminating the welded part by the above flash lamp 7 (refer to Patent Document 7, for example).

According to this device, each of the above-described flash lamps 7 is used to illuminate a molten weld pool and the periphery thereof at a high brightness, thereby imparting light higher in intensity than light emitted from the molten weld pool itself or scattered light. This also allows light from a welded part illuminated with highly bright illumination by the above-described electronic shutter to be made incident into the CCD camera 9, while adverse light such as scattered light is cut to greatly decrease the quantity of incident light by closing the electronic shutter, thereby making it possible to photograph the welded part. In this device, one array of pixels arranged along a direction orthogonal with a groove portion 8 on an image of the welded part formed by the CCD camera is used to calculate the brightness for each pixel, thereby automatically detecting a position of the groove portion 8 with reference to variation in the brightness of each of the pixels arranged in one array.

Meanwhile, tailored blank technology is one of the technologies adopted in recent years for fabricating automobile bodies. According to the tailored blank technology, in assembling automobile bodies, there are some areas where a plate is made thick to raise the strength for securing safety and other areas where a high strength is not required. A thick steel plate is used only for the area where a high strength is required and a thin steel plate is used in the area where high strength is not required, or a steel plate equal in thickness but different in strength is used in some areas, depending on the necessity of strength. A plurality of these steel plates differing in thickness and strength are welded before they are pressed, and connect these steel plates together to produce one sheet of combined steel plates, known as a tailored blank member, and the tailored blank member is used for press working or the like, thereby producing a body panel of an automobile.

Use of the above-described tailored blank technology makes it possible to save the body weight of an automobile as compared with a body manufactured according to a conventional method by which steel plates uniform in thickness are used and additional press parts are welded at an area where a particularly high strength is required for reinforcement.
[Patent Document 1] Japanese Published Unexamined Patent Application No. H08-174217
[Patent Document 2] Japanese Published Unexamined Patent Application No. H11-179578
[Patent Document 3] Japanese Published Unexamined Patent Application No. H06-304754
[Patent Document 4] Japanese Published Unexamined Patent Application No. 2001-12924
[Patent Document 5] Japanese Published Unexamined Patent Application No. 2000-196924
[Patent Document 6] Japanese Published Unexamined Patent Application No. 2000-184243
[Patent Document 7] Japanese Published Unexamined Patent Application No. 2004-74264

### [Disclosure of the Invention]

### [Problems to be Solved by the Invention]

Meanwhile, in manufacturing tailored blank members according to the above-described tailored blank technology, steel plates differing in thickness are subjected to butt welding when required. When these members to be welded differing in thickness are subjected to butt welding, the butt welded part is observed by using a device for visualizing the welded part illustrated in Fig. 6A and Fig. 6B described above. There is a fear that a shadow may be generated at a butt welded part of a welding member with a counterpart due to a difference in thickness between these members to form a step at the welded part of the welding member with the counterpart. This is because each of the pulse laser irradiators 5a and 5b is arranged at a position deviated in a planar manner at a predetermined angle from a longitudinal direction in which the welding operation proceeds or a direction in which a groove portion is extended.

In the welded-part visualization device illustrated in Fig.7A and Fig.7B, since a pulse laser irradiator 5c is arranged at a position deviated in a planar manner at a predetermined angle from a longitudinal direction in which the welding operation proceeds or a direction in which a groove portion is extended, there is a fear that a shadow may be generated at a welded part of welding members with a counterpart different in thickness.

In the welded-part visualization device illustrated in Fig. 8, since a flash lamp 7 is arranged on both the right and left sides of the groove portion 8, there is a fear that a shadow may be generated at a butt welded part of welding members differing in thickness in association with a difference in thickness between these members.

As described above, in conventional welded-part visualization device where a shadow is generated at a butt welded part of welding members differing in thickness, problems may arise that a gap width of a groove portion, which is extracted by image processing as a monitoring element, is misjudged to be larger than an actual gap width, or a butting position of welding members, that is, a groove position, is misjudged to be shifted from the actual position.

In particular, at a butt welded part of welding members greatly differing in thickness which is used recently from time to time in manufacturing tailored blank members, the effect of the above-described shadow becomes prominent, which results in misjudging the gap width or the groove position.

Further, in any one of Patent Document 1, Patent Document 2, Patent Document 3 and Patent Document 4, no specific description is made for the relative position in arranging an illumination light source and a camera. Therefore, no suggestion has been made regarding the relative positional relation between the illumination light source and the camera.

The present invention has been made in view of the above-described circumstances, and an object of the present invention is to provide a welded-part visualization method and a device for observing a butt welded part of welding members to be welded with a counterpart differing in thickness which is used in manufacturing tailored blank members, without any effects of a shadow.

### [Means for Solving the Problems]

In the present invention, a welded-part visualization device is provided capable of solving the above described problems. Immediately above the groove portion in a welding plane in which the welding operation proceeds, a camera for photographing the welded part is arranged at a predetermined angle behind the welded part in the welding direction with respect to a normal line. Above the groove portion, an illumination light source is also arranged at a symmetrical position to the camera about the normal line as a symmetrical axis, and the illumination light source is disposed at an angle of ±10° to 20° from the symmetrical angle of the camera with respect to the normal line. While the welded part is illuminated by the illumination light source disposed above the groove, the welded part of the above welding members is photographed by the above-described camera.

Further, another welded-part visualization device is provided for solving problems, in which, a camera for photographing the welded part is disposed at a predetermined inclined angle with respect to the normal line behind the weld line from the groove portion of the welding members. Above the groove portion, an illumination light source is also disposed in the vicinity of the symmetrical position of the camera about the normal line. The angle of the illumination light source with respect to the normal line is within a range of ±10° to 20° from the symmetrical angle of the camera about the normal line. The welded part, illuminated by a high brightness light from the illumination light source, is photographed by the above-described camera.

Still further, the present invention provides a welded-part visualization device, in which, a camera for photographing the welded part is disposed above the groove portion of the welding members at a predetermined inclined angle with respect to a normal line involved in the welding plane. An illumination light source is also arranged above the groove portion at a symmetrical position to the above-described camera. The normal line is given as a symmetrical axis, and the illumination light source is disposed at an angle to the normal line by deviating by ±10° to 20° from the symmetrical position of the camera about the normal line.

In addition, in the present invention provides another welded-part visualization device. A camera for photographing the butt welded portion having a step due to difference in thickness of the welding members. An illumination light source is disposed at a symmetrical position of the camera from the normal line. An illumination light source is arranged immediately above the groove in the vicinity symmetrical to the above-described camera. The normal line is given as a symmetrical axis and the illumination light source is disposed shifting by ±10° to 20° with respect to the angle of the camera to the normal line.

### [Effects of the Invention]

According to the present invention, favorable effects are obtained, which are as follows.
(1) Immediately above a groove in the vicinity of a butt welded part of welding members or in the vicinity of a welded part which has a step by welding members differing in thickness, a camera is arranged at a predetermined inclined angle with respect to a normal line from the welded part, and an illumination light source is arranged at an angle in the vicinity of the symmetrical position of the camera about the normal line, as a symmetrical axis, by shifting by ±10° to 20° with respect to an arranged angle for the normal line by the camera, thereby making it possible to prevent a shadow generated in association with a step resulting from a difference in thickness of the members to be welded.

(2) Further, since the camera is arranged immediately above the groove, the welded part can be photographed favorably without a field of view being blocked by the step.
(3) It is, therefore, possible to remove a site affected by the shadow and make an accurate observation of the welded part.

(4) Still further, regular reflection components of high-brightness illumination light irradiated from the illumination light source toward the welded part are prevented from being made incident into a camera, thereby causing no halation or the like in association with any change in surface conditions of an object to stably observe the welded part.
(5) It is, therefore, possible to remove the influence of the step formed at a welded part during observation of the welded part and also give a greater flexibility in surface conditions of welding members, irrespective of the presence or absence of the step. Therefore, it is possible to stably extract monitoring elements such as position of the groove portion and gap width, thereby judging at an improved accuracy whether the welded part is acceptable or not.

### [Detailed Description of the Drawings]

Fig. 1A is a side view illustrating major constitutions of the welded-part visualization device described in one embodiment of the present invention, and Fig. 1B is a view taken along a line A-A in Fig. 1A above.
Fig. 2 is a schematic side view illustrating a device (experiment device) used in deciding the position of a CCD camera and that of a flash lamp in the welded-part visualization device given in Fig. 1A above.
Fig. 3 shows the experiment results on a galvanized steel plate used as welding members of the experiment device of Fig. 2 above, in which Figs. 3A to 3D are brightness diagram showing changes in brightness detected by pixels arranged in orthogonal direction crossing a groove portion at right angles on an image of the CCD camera, when the angle of the illumination light source θ_{L} is changed from 30º to 45º with respect to the normal line.
Fig. 4 shows the experiment results on galvanized steel plate used as welding members of the experiment device of Fig. 2 above, in which Figs. 4E to 4G are brightness diagrams showing changes in brightness detected by pixels arranged in a direction crossing a groove portion at right angles on an image of the CCD camera, when the angle of the illumination light source θ_{L} is changed from 15º to 25º with respect to the normal line.
Fig. 5 shows the experiment results using SUS plate members as welding members of the experiment device of Fig. 2 above, in which Figs. 5H to 5K are brightness diagrams showing changes in brightness detected by pixels arranged in a direction crossing a groove portion at right angles on an image of the CCD camera, when the angle of the illumination light source θ_{L} is changed from 30º to 45º with respect to the normal line..
Fig. 6A is a schematic plan view illustrating one example of a conventional welded-part visualization device, and Fig. 6B is a view taken along line B-B in Fig. 6A above.
Fig. 7A is a schematic plan view illustrating another example of the conventional welded-part visualization device, and Fig. 7B is a view taken along line from C to C in Fig. 7A above.
Fig. 8 is a schematic view illustration still another example of the conventional welded-part visualization device.

### [Description of Symbols]

10a and 10b: welding members to be butt welded
11: groove portion (groove)
12: welded part
13: CCD camera (camera)
14: normal line
15: flash lamp (illumination light source)

### [Best Modes for Carrying Out the Invention]

Hereinafter, an explanation will be made for the best mode for carrying out the present invention with reference to the drawings.

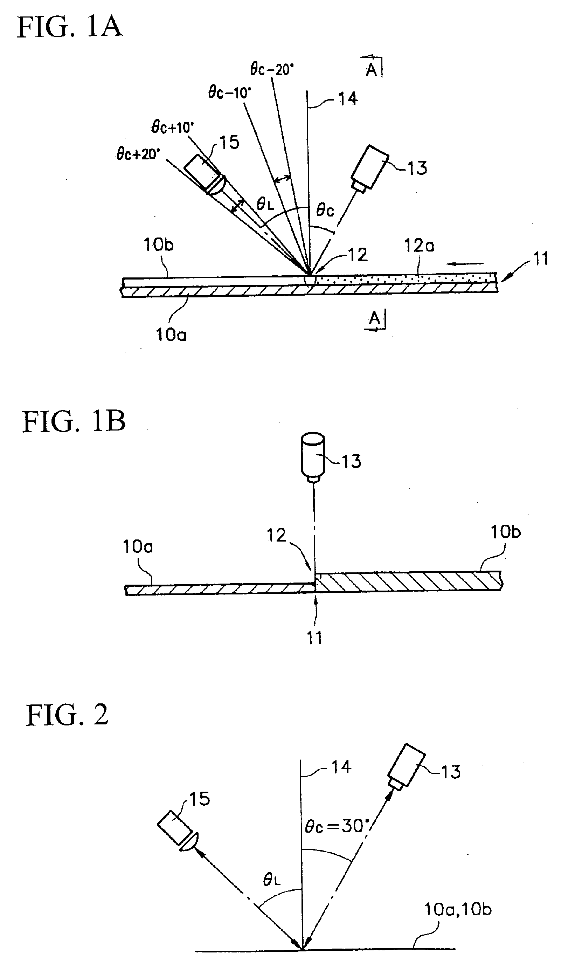

Fig. 1A and Fig.1B illustrate major constituting elements of a welded-part visualization device in the present embodiment for observing a welded part of welding members differing in thickness.

That is, in the welded-part visualization device, a high pixel CCD camera 13 equipped with an electronic shutter for photographing a welded part 12 formed by a laser welding torch (not illustrated) is provided inside a vertical plane immediately above a groove portion 11. At the groove portion 11, welding members 10a and 10b differing in thickness are subjected to butt welding, so that the camera 13 is disposed at a predetermined inclined angle (θ_{C}) behind the welding direction in a welding plane with respect to the normal line 14 of each of the welding members 10a and 10b such that the sight of the welded part is not interrupted by the laser welding torch.

Further, this welded-part visualization device is provided with a high-brightness flash lamp 15 as an illumination light source, which is positioned at the symmetrical angle of the camera within a range from +10° to 20° to -10° to -20° from the symmetrical angle of the CCD camera 13 inside a vertical plane with respect to the normal line 14 to be observed given as a symmetrical axis. That is, the flash lamp 15 is provided such that the high-brightness flash lamp 15 is inclined forward to an angle θ_{L} in the welding direction in which the welding operation proceeds with respect to the normal line 14, said θ_{L} is arranged to satisfy the condition that the relationship of θ_{L} = θ_{C} ± 10° to 20° is obtained with respect to the angle θ_{C} to the normal line 14 by the CCD camera 13.

Reference numeral 12a denotes welding beads. In the above description, the flash lamp 15 is arranged forward with respect to the welding direction in the welding plane or the CCD camera 13 is arranged behind the welding direction in the welding surface. However, the CCD camera 13 and the flash lamp 15 may be arranged so as to be reversed with respect to the welding direction in the welding plane. Further, although not illustrated, this welded-part visualization device may be provided with a timing device for synchronizing opening/closing timing of an electronic shutter of the CCD camera 13 with light emission intervals of the flash lamp 15.

As with a conventional welded-part visualization device illustrated in Fig. 7A and Fig. 7B, according to this welded-part visualization device, the flash lamp 15 is used to illuminate a molten weld pool and the periphery thereof at a high brightness, thereby giving light higher in intensity than light emitted from the molten weld pool itself or scattered light. At the same time, light from a welded part 12 illuminated at a high brightness is allowed to be made incident into the CCD camera 13 by use of the electronic shutter, while adverse light such as scattered light is cut by closing the electronic shutter to greatly decrease the quantity of incident light, thereby obtaining an image of the welded part 12.

In this case, a detailed explanation will be made regarding angle conditions for arranging the flash lamp 15.
The present inventors have contemplated that when a butt welded part 12 of a welding members 10a and 10b differing in thickness is illuminated at a high brightness, one unit of the flash lamp 15, which is a light source, is arranged immediately above a groove portion 11 so as not to generate a shadow at the welded part 12. Further, they have contemplated that the CCD camera 13 is also arranged immediately above the groove portion 11 in such a way that the butt welded part 12 of the welding member 10a and 10b differing in thickness can be photographed and observed without a field of view being blocked by the step formed due to a difference in thickness between the members to be welded 10a and 10b.

As described above, where the CCD camera 13 and the flash lamp 15 which is a light source are both arranged immediately above the groove portion 11 or inside a vertical plane immediately above the groove portion 11, in most cases, a welding torch such as a laser welding torch is arranged above the welded part 12. Therefore, it is difficult in terms of space that the CCD camera 13 and the flash lamp 15 are placed together only forward or only behind with respect to the welding direction, that is, in the welding direction in which the groove portion develops with respect to the welding torch. Under these circumstances, in this welded-part visualization device, the CCD camera 13 and the flash lamp 15 are arranged separately either forward or backward with respect to the welding direction in which the welding operation proceeds inside the vertical plane immediately above the groove portion 11.

The present inventors have carried out the observation of a welded part 12 using a CCD camera 13 by changing the illumination angle of a flash lamp 15 in a case where the CCD camera 13 and the flash lamp 15 are arranged so as to face each other at the center of the welded part 12 along the groove portion 11, as described above. It was found that when the CCD camera 13 and the flash lamp 15 are arranged on both sides of the normal line 14 at a symmetrical angle, a so-called regular reflection component, in which light illuminated at a high brightness from the flash lamp 15 to the welded part 12 reflects regularly on the surfaces of welding members 10a and 10b, is allowed to be intensively incident into the CCD camera 13, by which an observation image of the welded part 12 photographed by the CCD camera 13 is rendered in an undesirable state for conducting image processing so as, for example to detect the groove position.

In order to solve this problem ,the present inventors conducted following experiments and demonstrated an appropriate arrangement of the CCD camera 13 and the flash lamp 15 for obtaining an observation image of the welded part appropriate for image processing.

Fig. 2 illustrates a constitution of the device (experimental device) used in the present experiment conducted by the present inventors. In this experimental device, galvanized steel plates are used as welding members 10a and 10b, and the CCD camera 13 is arranged such that an inclined angle θ_{C} with respect to the normal line 14 is θ_{C} = 30° inside a vertical plane immediately above a butt portion of the galvanized steel plate corresponding to a groove portion 11. Under this condition, the flash lamp 15 is arranged at an opposite side behind the normal line 14 such that an inclined angle θ_{L} with respect to the normal line 14 can be changed at 5° intervals each from 30° to 45°, thereby obtaining an observation image of the butt portion of a galvanized steel plate with a counterpart in place of the welding members 10a and 10b, by using the CCD camera 13 at each predetermined inclined angle of θ_{L}.

Then, the present inventors have determined the brightness for each pixel on one array of pixels arranged along a direction orthogonal to a butt portion of the galvanized steel plate with a counterpart (groove portion 11) on an image of the welded part by using the CCD camera 13, and image processing is conducted for each observation image to detect a position of the groove portion 11. A series of diagrams illustrating variance in brightness were prepared by plotting the brightness of each pixel with respect to the position of each pixel arranged in one array as described above, in order to extract monitoring elements such as groove position and gap width by image processing.

Conditions other than the arranged angle of the CCD camera 13 with the flash lamp 15 are established as follows: camera position, 250mm from the surface of image element to an object to be observed; lens aperture, F22.6; electronic shutter: 1/13400 second; light quantity of flash lamp, 4.0mJ at the end of injection lens (Collimate lens); flash lamp position: 200mm from the end of the injection lens to the position of an object to be observed.

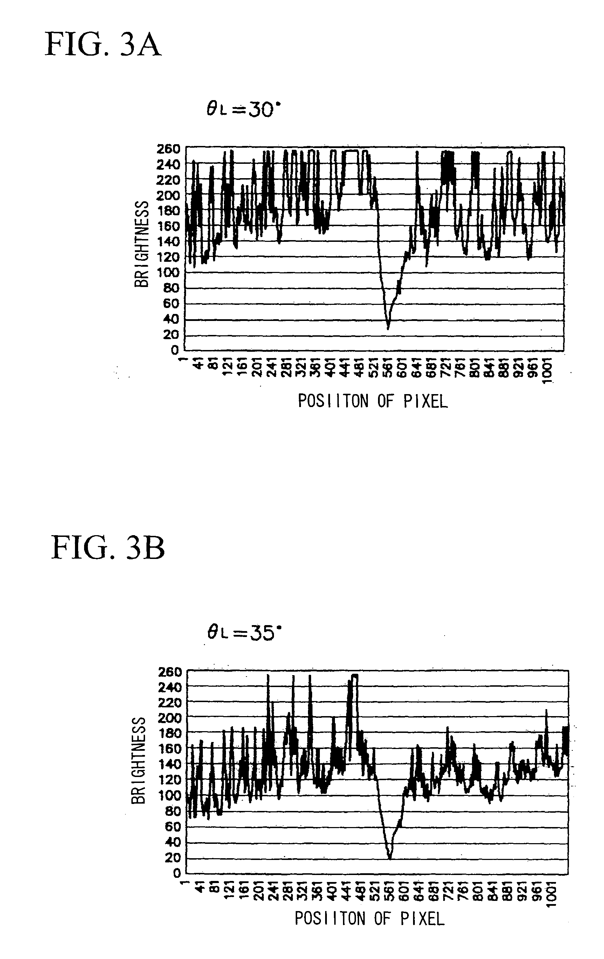

As a result, a series of diagrams were obtained which illustrate variance in brightness as given in characteristic diagrams of Fig. 3A to Fig. 3D in a case where an inclined angle θ_{L} of the flash lamp 15 is set at 30°, 35°, 40° or 45°. As illustrated in the characteristic diagram Fig. 3A, where θ_{L} is equal to 30°, that is, θ_{L} is equal to θ_{C}, a great regular reflection is found at a flat part of galvanized steel plates as welding members 10a and 10b, thus resulting in halation or fluctuation in brightness, and showing a tendency of spot patterns or a greater variance in brightness for each pixel.

This is due to the fact that since the CCD camera 13 and the flash lamp 15 are arranged at a symmetrical angle, with the normal line 14 given as a symmetrical axis, a regular reflection component on the galvanized steel plate in the incident light into the CCD camera 15 after irradiating toward the galvanized steel plate from the flash lamp 15 becomes predominant. Due to this, the brightness distribution is directly influenced by irregularities on the surface of the galvanized steel plate, the difference in the reflection ratio due to variance in galvanizing quantity, and the difference in the reflection ratio resulting from variance in oil applied on the surface of the steel plate. When detecting the position of the groove portion 11 by the image processing, in most cases, a valley in brightness variation is determined as the groove portion. For this reason, as illustrated in the characteristic diagram Fig. 3A, where there is a great fluctuation in brightness in a whole range of pixel positions, it is difficult to detect the position of the groove portion 11 by image processing.

In the case of the characteristic diagram Fig. 3B, where θ_{L} is equal to 35°, brightness fluctuation decreases compared to the above case where θ_{L} is equal to 30°. However, in this case as well, a large fluctuation in absolute brightness is found, and it is difficult to detect the position of the groove portion 11 by image processing.

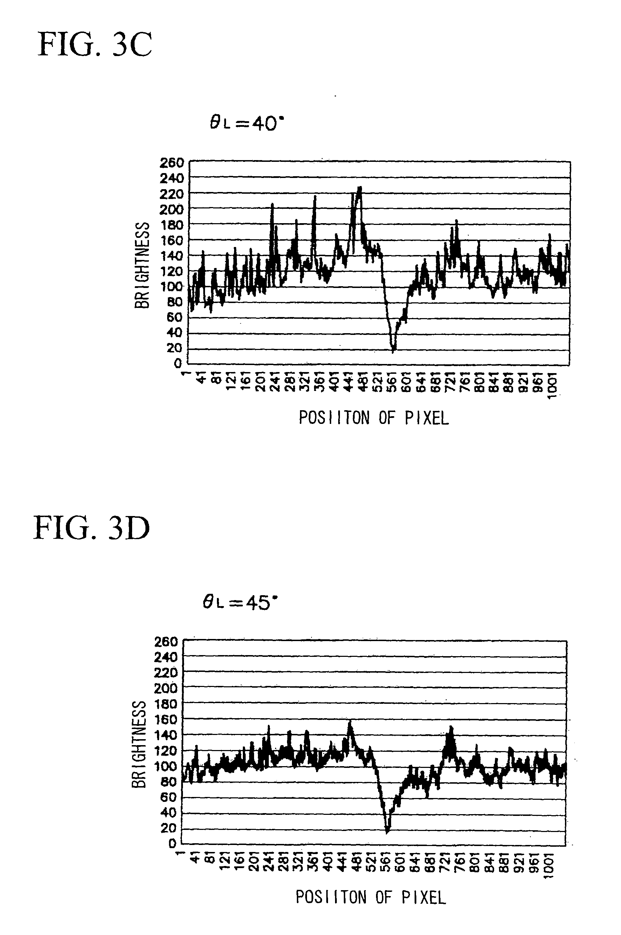

As shown in Fig. 3C, wherein θ_{L} is equal to 40°, variance in brightness is considerably converged. Further, as seen in the characteristic diagram Fig. 3D, where θ_{L} is equal to 45°, unevenness of the surface of the galvanized steel plate appearing on an observation image by the CCD camera 13 is suppressed to the greatest extent. At the same time, halation which may be generated in the vicinity of the groove portion 11 is substantially prevented and variance in brightness is decreased.

This is due to the fact that as there is an increasing difference in the angle between θ_{L} and θ_{C}. Light which is made incident into the CCD camera 13 after irradiating toward the galvanized steel plate from the flash lamp 15 does not include the reflection component but predominantly includes scattered light, thereby, the effect of a difference in reflection ratio resulting from the above-described surface condition of the galvanized steel plate is decreased and the intensity of the incident light into the CCD camera 13 is equalized.

As described above, in the characteristic diagram Fig. 3D, the brightness of pixels at a position corresponding to the groove portion 11 is decreased greatly with respect to a relatively equalized brightness of other pixels apart from the position of the groove portion 11, showing a large valley on the variance in brightness diagram, which is considered to be appropriate in detecting the position of the groove portion 11 by image processing.

Next, under the same experimental conditions described above, the inclined angle of θ_{L} with respect to the normal line 14 of the flash lamp 15 is changed at 5° intervals each from 25° to 15°. An observation image of a butt portion of galvanized steel plates as welding members 10a and 10b is obtained by using the CCD camera 13 at each predetermined inclined angle of θ_{L}, and variance in brightness diagrams are prepared on the basis of the thus obtained observation images as described above to evaluate possibilities of extracting monitoring elements such as groove position and gap width by image processing.

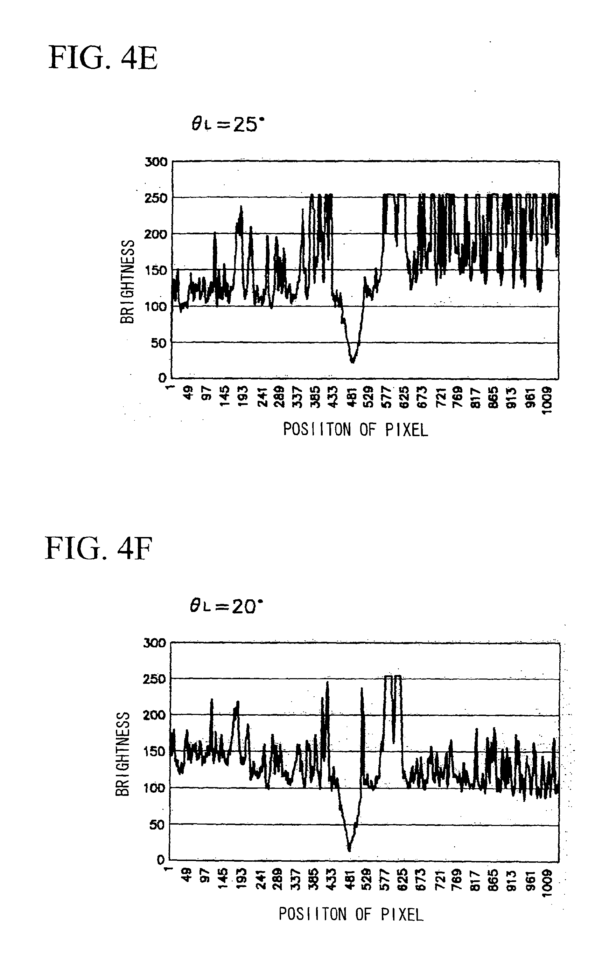

As a result, where the inclined angle θ_{L} of the flash lamp 15 is given at 25°, 20° or 15°, the variance in brightness is obtained as illustrated in characteristic diagrams of Fig. 4E to Fig. 4G.

As apparent from the characteristic diagram Fig. 4(e), where θ_{L} is equal to 25°, and θ_{L} is relatively closer to θ_{C}, that is, the CCD camera 13 and the flash lamp 15 are deviated only by 5° from a symmetrical angular arrangement in which a normal line 14 is given as a symmetrical axis. Therefore, a regular reflection component on the surface of the galvanized steel plate is predominant in the incident light into the CCD camera 13 after irradiating a galvanized steel plate from the flash lamp 15, similarly to the case of the characteristic diagram Fig. 3B, where θ_{L} is equal to 35°, there is a great variance in absolute brightness variance in the brightness diagram, due to generation of halation, thereby making it difficult to detect the position of the groove portion 11 by image processing.

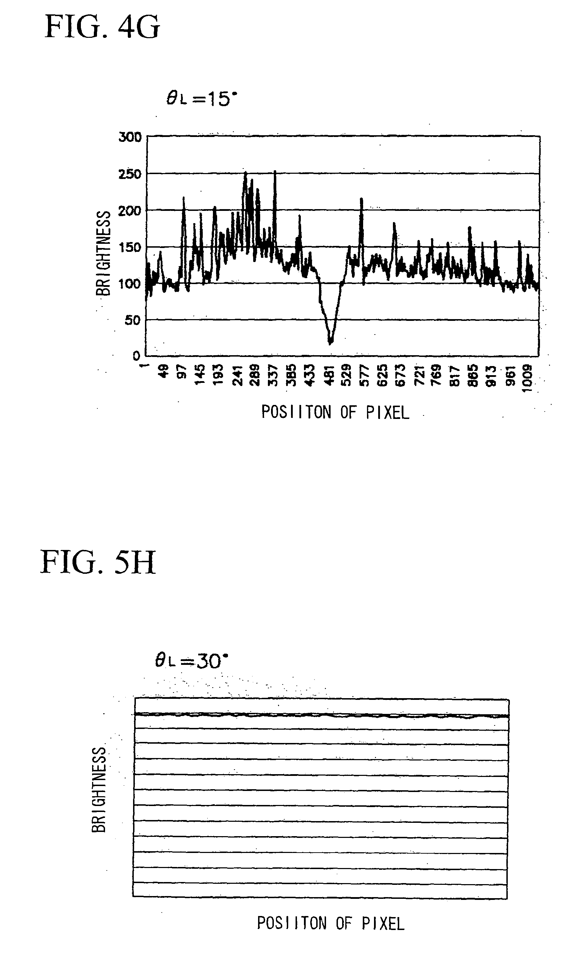

In the characteristic diagram of Fig. 4F, where θ_{L} is equal to 20°, variance in brightness is relatively converged, indicating that the effect of halation by regular reflection can be suppressed considerably. Further, as shown in characteristic diagram Fig. 4G, where θ_{L} is 15°, the effect of halation on the brightness in the vicinity of the groove portion 11 is further suppressed.

As shown in the characteristic diagram of Fig. 3C, where θ_{L} is 40° and in the characteristic diagram of Fig. 3D, where θ_{L} is 45°, when the difference in angle between θ_{L} and θ_{C} is great, light which is made incident into the CCD camera 13 after irradiating a galvanized steel plate from the flash lamp 15 becomes predominant not in reflection light but in scattered light. The decrease of the reflection ratio generated by the surface condition of the galvanized steel plate equalizes the intensity of light made incident into the CCD camera 13. As shown in the characteristic diagram of Fig. 4F and the characteristic diagram of Fig. 4G, variance in brightness is decreased so that it becomes possible to detect the position of the groove portion 11 by image processing on the basis of the valley position in variance of the brightness.

In contrsat, a SUS member is smoother on the surface and reflects light regularly to a greater extent than the galvanized steel plate. There is a possibility of processing a work piece having a surface similar in smoothness to the SUS member in an actual welding and production line.

With the above fact taken into account, the SUS member is used in place of the above galvanized steel plate as welding members 10a and 10b as the object to be observed. Under the experiment conditions similar to those described above, an inclined angle θ_{L} with respect to a normal line 14 of the flash lamp 15 is changed at 5° intervals each from 30° to 45°. An observation image of butt portion of two SUS welding members 10a and 10b is obtained at every predetermined inclined angle θ_{L} by using the CCD camera. Diagrams indicating variance of brightness are prepared on the basis of the thus obtained individual observation images, as with the above-described galvanized steel plate, so that possibilities of extracting monitoring elements such as groove position and gap width are examined by image processing. It is noted that conditions other than the use of the SUS member as welding members 10a and 10b are the same as those used in the above-described galvanized steel plate.

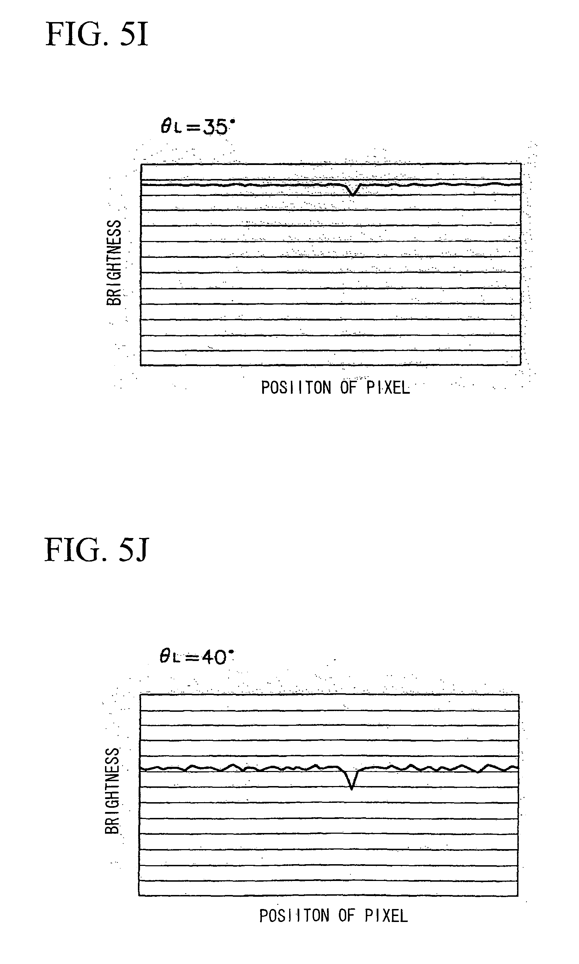

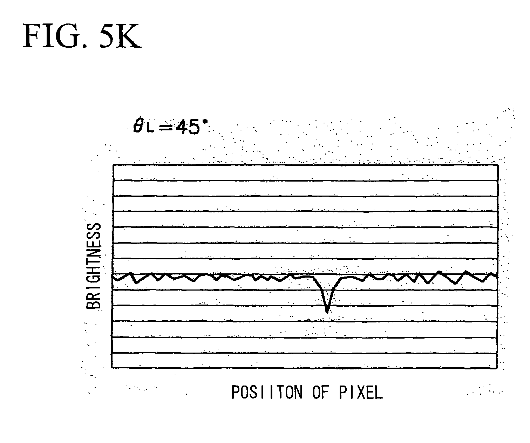

As a result, characteristic diagrams of Fig. 5H to Fig. 5K are obtained in each case where an inclined angle of the flash lamp 14 is set at 30°, 35°, 40° or 45°.

As apparent from characteristic diagrams of Fig. 5H and Fig. 5J, halation is confirmed to occur when θ_{L} is in a range from 30° to 40°. This is due to the fact that since the SUS member as the welding members 10a and 10b are smoother on the surface than the galvanized steel plate and the regular reflection component on the surface of the SUS member in incident light into the CCD camera 13 after irradiating toward the SUS member from the flash lamp 15 becomes very large, light made incident into each pixel of the CCD camera 13 is excessively high in brightness. In this case, even in an attempt to detect the position of a groove portion 11 by image processing, it is difficult to detect the position of the groove portion 11 due to an excessively high brightness as a whole.

In contrast, as illustrated in the characteristic diagram of Fig. 5K, where θ_{L} is equal to 45°, halation is suppressed as indicated by the variance of brightness in the vicinity of a groove portion 11 on observation images by the CCD camera 13, which results in providing a brightness diagram that can detect the position of the groove portion 11 by image processing.

With these experimental results taken into account, the present inventors have found that even where the CCD camera 13 and the flash lamp are arranged to face each other above the groove portion 11 in a welding direction of the groove portion 11 on both sides of the normal line, when the flash lamp 15 is positioned at the symmetrical position with respect to an inclined angle θ_{C} of the CCD camera from the normal line 14 such that an inclined angle θ_{L} of the flash lamp is positioned within an angular range of ±10° to 20° in an angular arrangement symmetrical to the CCD camera 13, with respect to the normal line 14 as a symmetrical axis. Due to the inclined angle θ_{L}, the regular reflection component of high-brightness illumination light irradiating toward welding members 10a and 10b from the flash lamp 15 is prevented from directly being made incident into the CCD camera 13, and the welding members 10a and 10b can be observed under scattered light of the high-brightness illumination light irradiated from the flash lamp 15.

Therefore, in the welded-part visualization method and the device described in the present embodiment, a CCD camera 13 for photographing the welded part 12 is provided at a predetermined inclined angle θ_{C} with respect to a normal line 14 inside a vertical plane immediately above a groove portion 11 where the above-described welding members 10a and 10b are subjected to butt welding.
Also a high-brightness flash lamp 15 is provided such that an angle with respect to the normal line 14 is set within a range of ±10° to 20° from an angular arrangement symmetrical to the CCD camera 13 in which the normal line 14 is given as a symmetrical axis.

According to the above-described welded-part visualization method and the device, even where welding members 10a and 10b differing in thickness are subjected to butt welding to prepare a welded part 12, it is possible to prevent a shadow generated at the welded part 12 by high-brightness illumination light irradiated from the flash lamp 15, because the flash lamp 15 is arranged inside the vertical welding plane immediately above the groove portion 11.

Further, since the CCD camera 13 is also arranged inside the vertical welding plane immediately above the groove portion 11, it is possible to photograph the welded part 12 using the CCD camera 13, without a field of view being blocked. This is true even where there is a step between the members 10a and 10b due to a difference in thickness of these members.

Still further, regular reflection components in which high-brightness illumination light irradiated on taking photos from the flash lamp 15 to welding members 10a and 10b reflects on the surfaces of the welding members 10a and 10b can be prevented from directly being made incident into a CCD camera 13, thereby making it possible to prevent halation generated on an image of the welded part 12 photographed by the CCD camera 13. Therefore, it is possible to make an accurate extraction of monitoring elements such as position of the groove portion 11 and gap width by processing images of the welded part 12. Accordingly, it is also possible to judge at an improved accuracy whether the welded part 12 is acceptable or not.

The present invention shall not be restricted to the above described embodiments but may be applicable to a case where in place of welding members to be welded 10a and 10b differing in thickness, welding members having no difference in thickness are subjected to butt welding. In this case, observations can be made for welded parts in a state that the regular reflection component of the high brightness illumination light from the flash lamp 15, which is reflected on the surface of the welding members, is prevented from directly being made incident into the CCD camera 13. Therefore, it is possible to prevent halation which may be generated on images of the welded part 12 photographed by the CCD camera 13 and also make an accurate extraction of monitoring elements such as position of a groove portion and the gap width by processing images of the welded part 12. Accordingly, such an effect is obtained that is able to judge at an improved accuracy whether the welded part 12 is acceptable or not.

The present invention is also applicable to observations for a butt welded part of welding members other than the manufacture of tailored blank members. Further, the present invention is applicable to observations for a butt welded part of a welding member 10a with a counterpart 10b which are made of a material other than the galvanized steel plate or SUS member and also applicable to observations for a welded part by welding other than laser welding. Still further, the present invention may be applicable to any modifications which are not deviated from the gist of the present invention.

In the above-described embodiments, a CCD camera is used as a camera. However, in place of the CCD camera, a CMOS camera may be used in which CMOS (Complementary Metal-Oxide Semiconductor) is used as an imaging element. Further, a camera shutter shall not be restricted to an electronic shutter but any mechanical shutter may be used as long as it is sufficiently high in shutter speed.

Further, the above-described embodiments cover a butt welding of welding members 10a and 10b differing in thickness. However, the present invention may be applicable not only to the above butt welding but also to any welded part in general at which there is a step at a welded part to generate a shadow thereby. For example, the present invention may be applicable to a case where two welding members are overlapped and welded, with the edge being offset or a case where a step is formed at an overlapped welded part. The present invention is also applicable to the above-described overlapped welding.

## Claims

1. A welded-part visualization method for photographing a butt welded part comprising the steps of:
arranging a pair of welding plate members to be welded by butting respective plate members forming a welding direction;
arranging a camera for photographing the butt welded part above the groove line formed by a pair of welding plate members to be welded at a predetermined inclined angle of θ_{C} with respect to a normal line;
arranging an illumination light source arranged above the groove line at a position above the welded line at an angle of θ_{L} with respect to the normal line as a symmetrical axis; and
photographing the welded part by the camera while illuminating the welded part by a high brightness light emitted by the illumination light source,
wherein the angle of the illumination light source with respect to the normal line θ_{L} is set at θ_{L}=θ_{C} ±10° to 20° with respect to an angle of θ_{C} of the camera to the normal line.

2. A welded-part visualization method for photographing a butt welded part having a step between a pair of welding plate members to be welded comprising the steps of:
arranging a pair of welding plate members by butting both plate members forming a welding direction;
arranging a camera for photographing the butt welded part above the groove line formed by a pair of welding plate members to be welded at a predetermined inclined angle of θ_{C} with respect to a normal line;
arranging an illumination light source arranged above the groove line at a position above the welded line at an angle of θ_{L} with respect to the normal line as a symmetrical axis; and
photographing the welded part by the camera while illuminating the welded part by a high brightness light emitted by the illumination light source,
wherein the angle of the illumination light source with respect to the normal line θ_{L} is set at θ_{C} ±10° to 20° with respect to an angle of θ_{C} of the camera to the normal line.

3. A welded-part visualization device for observing a welded part comprising:
a camera for photographing a butt welded part, arranged above the groove line formed by a pair of welding plate members to be welded, at a predetermined inclined angle of θ_{C} with respect to a normal line, and
an illumination light source arranged above the groove line at a position symmetrical to the camera at an angle of θ_{L} about the normal line as a symmetrical axis,
wherein the angle of the illumination light source with respect to the normal line θ_{L} is set at θ_{L}=θ_{C}±10° to 20° with respect to the angle of camera θ_{C} to the normal line for photographing the welded part by the camera while illuminating the welded part by the illumination light source.

4. A welded-part visualization device for observing a welded part having a step between a pair of welding members to be welded comprising:
a camera for photographing a butt welded part, arranged above the groove line formed by a pair of welding plate members to be welded, at a predetermined inclined angle of θ_{C} with respect to a normal line, and
an illumination light source arranged above the groove line at a position symmetrical to the camera at an angle of θ_{L} about the normal line as a symmetrical axis,
wherein the angle of the illumination light source with respect to the normal line is set at θ_{L}-θ_{C}±10° to ±20° for photographing the welded part by the camera while illuminating the welded part by the illumination light source.
